# EUROPEAN PATENT APPLICATION

(11) **EP 1 439 113 A1**
(43) Date of publication of application: **21.07.2004**
(21) Application number: 03380134.1
(22) Date of filing: 04.06.2003
(51) Int. Cl.: B62D 53/08, B60D 1/52, B60P 3/12

(54) **Towing mechanism for industrial vehicles applicable to the fifth wheel of a tractor truck**

(30) Priority: 17.01.2003 ES 200300116
(71) Applicant: Talleres Monrepos S.L., 22193 Arascues (Huesca) (ES)
(72) Inventor: Bielsa Aguasca, Marcos, 22193 Arascues (Huesca) (ES)
(74) Representative: Davila Baz, Angel

(57) **Abstract**

Towing mechanism for industrial vehicles applicable to the fifth wheel of tractor trucks which consists of a main frame (1) on the lower part of which is mounted the kingpin (2) which is coupled on the fifth wheel of a tractor truck (3), and on which, operated by means of hydraulic cylinders, tilts the vertical frame (5) which in turn serves as support for the supporting frame (7) of the towed vehicle, also articulated and likewise operated by hydraulic cylinders. The vehicle support frame has two extendable telescopic arms (8), operated by hydraulic cylinders, which are slid under the broken down or damaged vehicle (10) in order to raise it and permit it to be towed. On the upper end of the vertical frame a winch (11) is mounted, for auxiliary tasks of pulling and initial approximation of the broken down vehicle.

## Description

### OBJECT OF THE INVENTION

The present invention relates to a towing mechanism for industrial vehicles applicable to the fifth wheel of a tractor truck the purpose of which resides in that duly coupled on the fifth wheel of a tractor truck it permits the recovery and towing of industrial vehicles which have broken down or suffered an accident, avoiding the permanent occupation of a towing vehicle, thereby making possible its employment for other jobs when the mechanism is decoupled.

### FIELD OF THE INVENTION

This invention finds its application within the industry dedicated to the fabrication of truck-mounted cranes, and equipment and devices for the hoisting and towing of vehicles, independently of the field of employment.

### BACKGROUND OF THE INVENTION

At the present time, the towing of broken down or damaged trucks or buses is carried out in the same manner as for saloon cars, by slightly raising the front or rear part of the truck or bus, generally that corresponding to the damaged or blocked axle, until it is suspended and pulling simultaneously in the towing direction, permitting the towed vehicle to run on the remaining axle or axles which it has.

The crane trucks intended for towing other trucks and buses have, in addition to the crane jib from which their name is derived, a mechanism generally consisting of two folding forks which are mounted on the rear part of the vehicle, and upon which rest the two wheels of the broken down vehicle axle. By means of an appropriate system said forks are raised until the vehicle is hoisted sufficiently to permit safe towing.

The system described, however, has the drawback that it has to be mounted on the platform of a truck in a permanent fashion, it being necessary to dedicate a truck exclusively to this end, so that it proves impossible to use it for activities other than towing, rendering the amortisation of and return from the truck difficult.

Taking this drawback into account, among many others, is why the invention herein disclosed has been conceived. Indeed, it is a question of providing a towing mechanism for industrial vehicles which can be mounted and dismounted to permit the use of the crane truck in other activities when it is not being used as such.

As a distinguishing characteristic of the proposed towing mechanism for industrial vehicles applied to the fifth wheel of a tractor truck, it is pointed out that it is not installed on the platform of rigid trucks, but is instead coupled on the fifth wheel of tractor trucks, in the same manner as with a semi-trailer, thereby permitting the employment of the tractor truck for other uses by merely "decoupling" the mechanism.

The applicant has no knowledge of the existence at the present time of any invention which presents the characteristics which are remarked as fitting.

### DESCRIPTION OF THE INVENTION

The towing mechanism for industrial vehicles applied to the fifth wheel of a tractor truck which the invention discloses, figures in itself as a clear innovation within its multiple fields of application, permitting the use of a tractor truck as a crane truck, thereby making possible the use of the vehicle for other activities, which will redound in an improved amortisation and better return.

In more specific terms, the towing mechanism for industrial vehicles applied to the fifth wheel of a tractor truck object of the invention, is constituted by a main frame, a vertical frame, a vehicle support frame and two extendable arms.

The main frame is mounted horizontally and serves as support for the remaining components. On the lower part of said frame is mounted the kingpin which is coupled on the fifth wheel of the tractor truck.

On the main frame, articulated on its lower end and operated by hydraulic cylinders, the vertical frame tilts, which in the retracted position of the mechanism is in a horizontal position, resting on the main frame, and when extended the mechanism is positioned vertically.

Likewise, on the vertical frame, articulated on its lower end and also operated by hydraulic cylinders, the vehicle support frame tilts, so that in the retracted position of the mechanism it is parallel to the vertical frame, and when extended the mechanism is in a basically horizontally position, slightly above ground level.

The vehicle support frame has two extendable, telescopic arms which are slid under the broken down or damaged vehicle, adapting to the most adequate point of suspension, in order to raise it and permit the towing thereof.

On the upper end of the vertical frame a winch is mounted for auxiliary tasks of pulling and initial approximation of the broken down vehicle.

The vertical frame as well as having a tilting movement, has a vertical displacement movement, when it is deployed, to permit adjustment of the height of the vehicle support frame.

The telescopic arms are operated in an independent manner to better adapt to the broken down or damaged vehicle.

### DESCRIPTION OF THE DRAWINGS

To complete the description that is being made and with the object of assisting in a better understanding of the characteristics of the invention, attached to the present descriptive specification, as an integral part thereof, are three sheets of drawings wherein by way of illustration and not restrictively, the following has been represented:
Figure 1 shows a view in profile of the towing mechanism for industrial vehicles in the retracted position.
Figure 2 shows a view in profile of the towing mechanism for industrial vehicles in the deployed position.

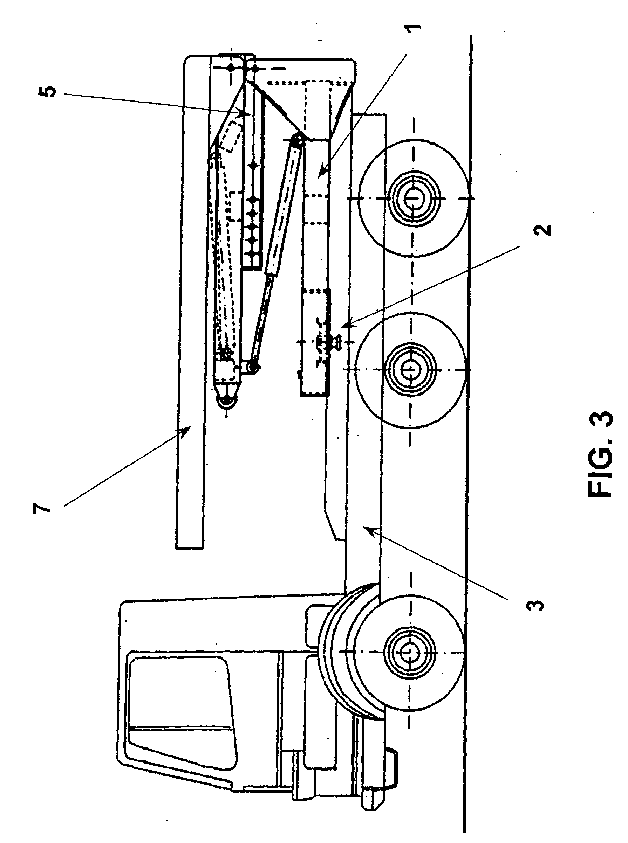

Figure 3 shows a view in profile of how the towing mechanism for industrial vehicles is mounted on a tractor truck in the retracted position.

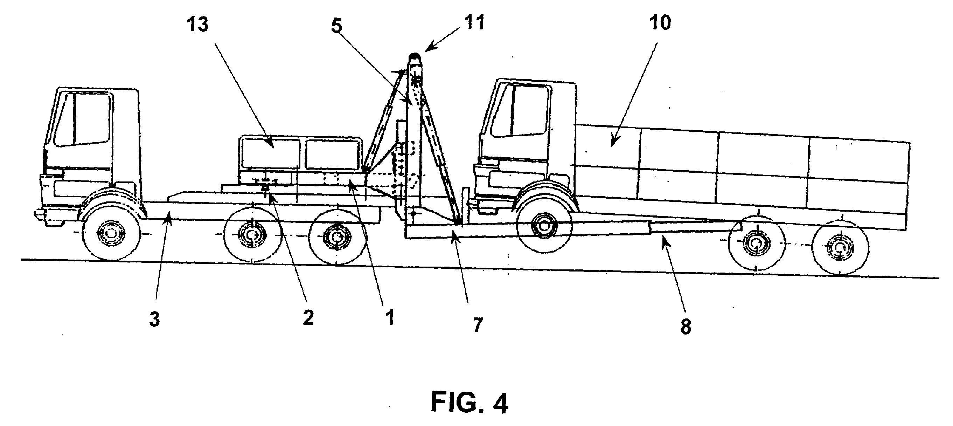

Figure 4 shows a view in profile of the two vehicles (the tractor and that broken down), of how the towing of broken down or damaged vehicles is carried out.

### PREFERRED EMBODIMENT OF THE INVENTION

In the light of the aforementioned figures, it can be seen how the towing mechanism for industrial vehicles applied to the fifth wheel of tractor trucks in question, is constituted by a main frame 1 mainly rectangular in plan and fabricated with steel quadrangular section, which is arranged horizontally and which serves as support for the remaining components. On the lower part of said frame the kingpin 2 is mounted, which is coupled on the fifth wheel of the tractor truck 3.

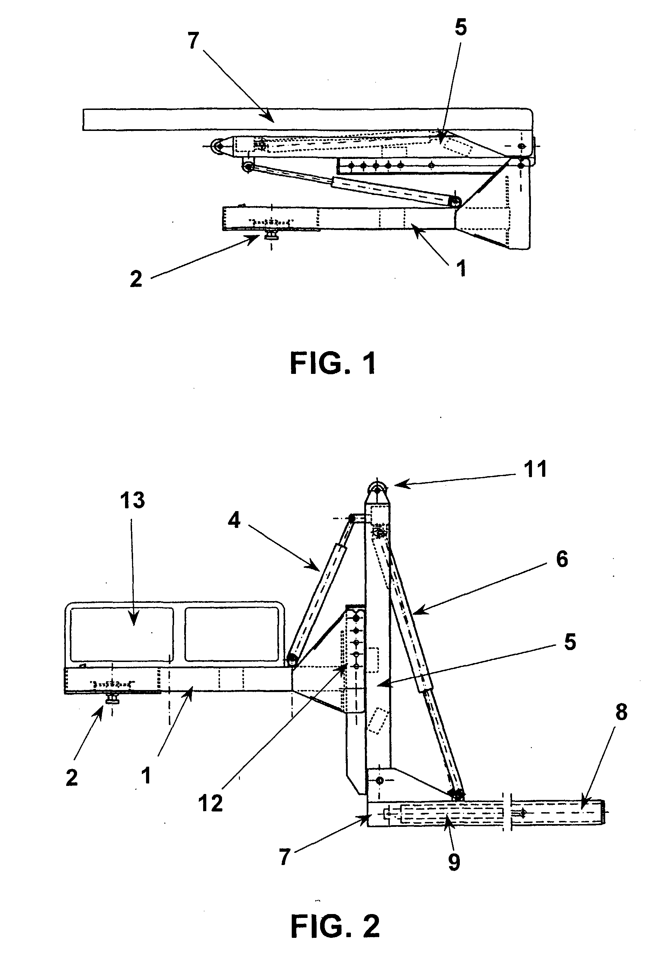

On the main frame, also mainly rectangular in plan and fabricated with steel quadrangular section, articulated on its rear end and operated by means of hydraulic cylinders 4, the vertical frame 5 tilts, which remains in the horizontal position (figure 1) when the mechanism is retracted and is vertical (figure 2) when the mechanism is deployed.

On the main frame, articulated on its lower end and likewise operated by means of hydraulic cylinders 6, the support frame 7 of the vehicle tilts, so that when the mechanism is retracted (figure 1) it is parallel to the vertical frame, and when the mechanism is extended (figure 2) it adopts a horizontal, or almost horizontal position, slightly above ground level.

The vehicle support frame has two extendable, telescopic arms 8, operated by hydraulic cylinders 9, which are slid underneath the broken down or damaged vehicle 10 to raise it until it is possible to tow. The actuation of these telescopic arms is independent for a better adaptation to the hooking requirements of the broken down or damaged vehicle.

On the upper end of the vertical frame a winch 11 is mounted for auxiliary tasks of pulling and initial approximation of the broken down vehicle.

Once the vertical frame has been adjusted in height, and through some holes 12, the equipment is blocked by means of pins in order that the hydraulic cylinders, despite having safety valves, suffer no damage.

For the actuation of the hydraulic gear, an electric pump is provided, fed from the batteries of the tractor truck or by means of a power point and pump fitted thereon.

On the main frame is mounted the operating and control system 13 of the hydraulic cylinders and winch which can be operated manually or by remote control via cable or radio.

## Claims

1. Towing mechanism for industrial vehicles applicable to the fifth wheel of a tractor truck **characterised in that** it is constituted by a mechanism for recovery and towing of broken down or damaged vehicles (10) which is coupled temporarily on the fifth wheel of a tractor truck (3), comprising a main frame (1) which holds the kingpin (2) for hooking and a frame (7) for supporting the broken down vehicle, articulated on the first and operated by hydraulic means.

2. Towing mechanism for industrial vehicles according to claim 1, **characterised in that** between the main frame (1) and the support frame (7) of the broken down vehicle, a vertical frame (5) is mounted joined by one side in a tilting manner to the main frame (1) and by the other side to the support frame (7), permitting the mechanism to be folded for better transportability.

3. Towing mechanism for industrial vehicles according to claim 1, **characterised in that** on the support frame (7) of the broken down vehicle at least one telescopic arm is mounted, of simultaneous and independent operation, which is slid below the chassis of the broken down or damaged vehicle for the suspension thereof.

4. Towing mechanism for industrial vehicles according to claim 1, **characterised in that** it includes a winch, preferably in a raised position, for auxiliary towing tasks.

5. Towing mechanism for industrial vehicles according to claim 2, **characterised in that** the vertical frame can move vertically, to permit the adjustment in height of the support frame to the height of the vehicle to be towed.

6. Towing mechanism for industrial vehicles according to previous claims, **characterised in that** the operation of the different elements is carried out by means of hydraulic devices.

7. Towing mechanism for industrial vehicles according to previous claims, **characterised in that** the operation and control system of the actuator devices is mounted on the mechanism itself, preferably on the main frame, constituting an autonomous system.
